# EUROPÄISCHE PATENTSCHRIFT

(11) **EP 1 647 444 B1**
(45) Veröffentlichungstag und Bekanntmachung des Hinweises auf die Patenterteilung: **08.09.2010**
(21) Anmeldenummer: 05022382.5
(22) Anmeldetag: 13.10.2005
(51) Int. Cl.: B60P 1/28, B62D 25/20

(54) **Kippbrücke mit einem Kippbrückenboden aus Blech**
Dump bucket floor made of steel
Fond en tôle d'acier d'une benne basculante

(30) Priorität: 13.10.2004 DE 102004049913
(43) Veröffentlichungstag der Anmeldung: 19.04.2006
(73) Patentinhaber: Franz Xaver Meiller Fahrzeug- und Maschinenfabrik-GmbH & Co KG, 80997 München (DE)
(72) Erfinder: Meissner, Uwe, 85560 Ebersberg (DE)
(74) Vertreter: Tiesmeyer, Johannes

(56) Entgegenhaltungen:
- FR-A- 2 833 248
- US-A- 6 022 068
- US-A- 6 082 073

## Beschreibung

Die Erfindung betrifft eine Kippbrücke mit einem Kippbrückenboden aus Blech zum Transport von Schüttgut oder dgl. auf einem Kipperfahrzeug, wobei die Kippbrücke am Kipperfahrzeug in eine Entladekippstellung schwenkbar ist, um aufgeladenes Schüttgut an einer Entladeseite der Kippbrücke auszuschütten.

Kippbrücken der hier betrachteten Art werden üblicherweise für den Transport von schwerem Schüttgut, etwa Bauschutt, Sand, Kies oder dgl., verwendet. Das Bodenblech einer solchen Kippbrücke ist insbesondere bei Auskippen des Schüttgutes starken Reibungbelastungen ausgesetzt, was mit einer erhöhten Verschleißbeanspruchung des Bodenbleches an der laderaumseitigen Fläche einhergeht.

Bisher war es üblich, zur Herstellung von Bodenblechen für Kippbrücken schweißbare Baustahlbleche zu verwenden, die hinsichtlich ihrer Blechdicke um ein Verschleißmaß "überdimensioniert" sind. Das Verschleißmaß ist so gewählt, dass durch den üblichen Abrieb des Blechmaterials während der üblichen Lebensdauer der Kippbrücke bei normaler Nutzung die für die strukturelle Festigkeit und Formhaltigkeit erforderliche Mindestblechdicke nicht unterschritten wird. Dieses Sicherheitsmaß an Blechdicke bedeutet jedoch den Nachteil, dass das betreffende Kippbrückenbodenblech und somit die damit ausgerüstete Kippbrücke das betreffende Kipperfahrzeug mit relativ großem Gewicht auch bereits ohne Ladung belasten.

Es sind in der Vergangenheit auch bereits Vorschläge gemacht worden, bei einem Hinterkipperfahrzeug den hinteren Bereich des Bodenblechs durch Aufsetzen und Fixieren eines gesonderten Verschleißbleches zu verstärken oder Blechteile unterschiedlicher Dicken aneinanderzufügen, um sie zu einem Bodenblech zu kombinieren, das im hinteren Bereich massiver ist als im vorderen Bereich. Der dadurch bedingte zusätzlich Fertigungsaufwand ist vergleichsweise groß und wirkt sich kostenerhöhend aus. Eine gattungsgemäße Kippbrücke mit unterschiedlich dicken Blechteilen ist aus der US-A-6 022 068 bekannt.

Der Erfindung liegt die Aufgabe zugrunde, eine Kippbrücke der eingangs genannten Art bereitzustellen, die ein vergleichsweise geringes Gewicht aufweist, ohne gesonderte Bodenverschleißauflagebleche oder aneinander zu fügende Bodensegmente unterschiedlicher Dicke auskommt und dennoch eine lange Nutzungsdauer bei üblicher Beanspruchung bietet.

Zur Lösung dieser Aufgabe wird eine Kippbrücke mit den Merkmalen des Anspruchs 1 vorgeschlagen.

Eine erfindungsgemäße Kippbrücke kann somit ein einlagiges Kippbrückenbodenblech aufweisen, welches über die Kippbrückenbodenlänge oder/und über die Kippbrückenbodenbreite verteilt unterschiedliche Blechdicken aufweist, wobei an Stellen, die im üblichen Schüttbetrieb erhöhter Abriebbeanspruchung durch das von der Kippbrücke abrutschende Ladegut ausgesetzt sind, eine größere Blechdicke vorgesehen ist als in Bereichen geringerer Abriebbeanspruchung. Gemäß einer bevorzugten Ausführungsform der Erfindung nimmt zumindest bereichsweise die Blechdicke des Kippbrückenbodens mit zunehmendem Abstand vom entladeseitigen Ende des Kippbrückenbodens in Richtung zu dem gegenüberliegenden Ende des Kippbrückenbodens ab. Das Bodenblech ist somit in der Nähe des entladeseitigen Endes der Kippbrücke vergleichsweise dicker ausgebildet, womit dem Umstand Rechnung getragen ist, dass der entladeseitige Bereich des Kippbrückenbodenblechs durch das beim Entladen vollständig darüber abrutschende Schüttgut stärker belastet wird als die von dem entladeseitigen Ende weiter entfernten Kippbrückenbodenbereiche, an denen beim Entladevorgang im Normalfall eine wesentlich geringere Schüttgutmenge abrutscht.

Bei Hinterkipperfahrzeugen ist das entladeseitige Ende des Kippbrückenbodens das heckseitige Ende. Eine solche Kippbrücke hat somit im hinteren Bereich eine größere Bodenblechdicke als im vorderen Bereich. In entsprechender Weise kann bei einem Einseitenkipper die Blechdicke des Kippbrückenbodenbleches über die Kippbrückenbodenbreite variieren, wobei die größere Blechdicke im entladeseitigen Bereich des Bodenbleches vorgesehen ist. Dieses Prinzip lässt sich auf Mehrseitenkipperfahrzeuge erweitern. Bei einem Dreiseitenkipper kann es gemäß der Lehre der vorliegenden Erfindung vorgesehen sein, dass der Kippbrückenboden im heckseitigen Bereich und an den Längsseitenbereichen dicker ausgebildet ist als in dazwischen liegenden mittleren und vorderern Bereichen. Die Erfindung umfasst aber auch Ausführungsformen von Kippbrücken für Dreiseitenkipper, bei denen die Blechdicke nur von hinten nach vorn hin abnimmt, nicht aber zwischen den lateralen Seiten. Eine solche Ausführungsform wird insbesondere dann bevorzugt, wenn der Kippfreiheitsgrad des Hinterkippens erheblich häufiger genutzt werden soll als die anderen Kippfreiheitsgrade.

Vorzugsweise ist das Kippbrückenbodenblech aus Stahl, insbesondere aus einem Baustahl gebildet, etwa aus ST 37-2. Die geforderte Dickenvariation des Kippbrückenbodenblechs wird vorzugsweise durch einen kontinuierlichen Formgebungsprozess und insbesondere durch Walzformgebung des Blechmaterials hergestellt. Dies kann z.B. in der Weise geschehen, dass die Walzen eines Walzenpaares während des Walzvorganges ihren Abstand zueinander ändern, so dass das dazwischen durchlaufende Blechwalzgut eine vorbestimmte Dickenvariation erhält.

Alternativ zu Stahl kommen auch andere Materialien, z.B. Aluminium, in Frage. Allgemein wird auch in einem solchen Fall die Blechdickenvariation vorzugsweise durch einen kontinuierlichen Formgebungsprozess erzeugt.

Wie schon oben angesprochen, weisen Kippbrücken nach der Erfindung Bodenbleche auf, welche hinsichtlich ihrer Blechdicken um ein Verschleißmaß "überdimensioniert" sind, wobei jedoch das Verschleißmaß an Stellen mit unterschiedlicher Abnutzungswahrscheinlichkeit unterschiedlich ist. Insbesondere bei Kippbrücken für Hinterkipper hat es sich als vorteilhaft herausgestellt, die Blechdicke des Kippbrückenbodens am entladeseitigen Ende so zu dimensionieren, dass sie mindestens dem 1,5-fachen der Blechdicke an dem gegenüberliegenden Ende des Kippbrückenbodens entspricht.

Ausführungsbeispiele der Erfindung werden nachstehend unter Bezugnahme auf die Figuren näher erläutert.
- Fig. 1: zeigt in einer schematischen Seitenansichtsdarstellung den hinteren Bereich eines Kipperfahrzeugs mit einer Kippbrücke in Entladekippstellung mit teilweise ausgebrochen dargestellter Seitenwand.
- Fig. 2: zeigt einen längs und quer ausgeschnittenen Abschnitt einer Halfpipe-Muldenkippbrücke in perspektivischer Darstellung.

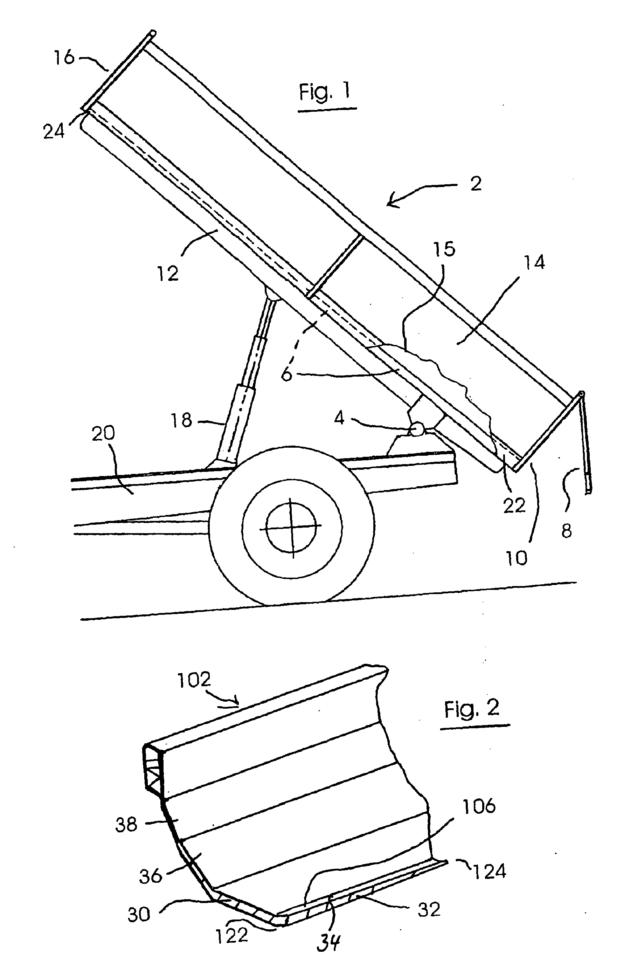

Bei dem Kipperfahrzeug in Fig. 1 ist die Kippbrücke 2 um die hintere Kippachse 4 aus ihrer normalen Fahrstellung heraus in die gezeigte Entladekippstellung geschwenkt worden. Bei einem solchen Kippvorgang kann etwaiges Ladegut (nicht gezeigt) an dem Kippbrückenboden 6 abrutschen, so dass es bei geöffneter Heckklappe 8 die Kippbrücke 2 an der nach unten weisenden Entladeseite 10 verlässt. Der Kippbrückenboden 6 ist an unteren Rahmenelementen 12 der Kippbrücke 2 abgestützt und ist umfänglich von den Seitenwänden 14, der Frontwand 16 und der Heckklappe 8 umgeben. In Fig. 1 ist die dem Betrachter zugewandte Seitenwand 14 bei 15 aufgebrochen dargestellt, um das Kippbrückenbodenblech 6 zu zeigen.

Mit 18 ist in Fig. 1 ein hydraulischer Hubzylinder gezeigt, welcher als Kippantrieb für die Kippbrücke 2 verwendet wird. Der Hubzylinder 18 stützt sich mit seinem unteren Ende am Fahrzeugrahmen 20 ab.

Das Bodenblech 6 hat an seinem entladeseitigen Ende 22 eine größere Dicke als an dem gegenüberliegenden Ende 24, wobei im Beispielsfall die Dicke des Kippbrückenbodenblechs 6 kontinuierlich und linear vom hinteren Ende 22 zum vorderen Ende 24 des Kippbrückenbodenblechs 6 abnimmt.

Es sind im Rahmen der Erfindung auch andere Verläufe der Dickenvariation möglich. So ist es durchaus denkbar, dass das Bodenblech 6 z. B. in der vorderen Hälfte der Kippbrücke eine konstante Dicke hat und die Dickenvariation nur im Bereich des hinteren Endes des Kippbrückenbodens vorgesehen ist. Jedenfalls ist der entladeseitige Endbereich des Kippbrückenbodens 6, dem eine größere Abnutzungswahrscheinlichkeit zuzuordnen ist, mit einer größeren Blechdicke präpariert. Über die Lebensdauer der Kippbrücke 2 kann dann bei üblichem Gebrauch der Fall eintreten, dass aufgrund von Verschleiß sich die Blechdicke zwischen dem hinteren Endbereich 22 und dem vorderen Endbereich 24 des Bodenblechs nach und nach im Wesentlichen angleicht.

Der Kippbrückenboden 6 ist jedoch schon im Neuzustand gewichtsoptimiert, und zwar unter Berücksichtigung des notwendigen Verschleißmaßes. Dieses "Verschleißmaß" ist jedoch nach Maßgabe der Abnutzungswahrscheinlichkeit an verschiedenen Stellen unterschiedlich bemessen worden.

Bei dem Ausführungsbeispiel gemäß Fig. 2 handelt es sich um einen Ausschnitt 102 einer Kippmulde eines Halfpipe-Kippers. Der Ausschnitt weist eine Querschnittsfläche 30 und eine Längsschnittfläche 32 auf. Wie anhand der Schnittfläche 32 zu erkennen ist, nimmt die Dicke des Bodenbleches 106 mit Abstand vom entladeseitigen Ende 122 in Richtung zum gegenüberliegenden Ende 124 ab. Dies entspricht der in Fig. 1 dargestellten Situation. In Fig. 2 ist ferner zu erkennen, dass die Blechdicke in einem zentralen unteren Bereich bei 34 größer ist als in den Randbereichen 36 und 38. Auch in dem Fall der Fig. 2 ist dem Umstand Rechnung getragen worden, dass die Kippbrücke 102 an Stellen größerer Abnutzungswahrscheinlichkeit mit größerer Wanddicke ausgeführt ist.

## Patentansprüche

1. Kippbrücke mit einem Kippbrückenboden (6; 106) aus Blech zum Transport von Schüttgut oder dgl. auf einem Kipperfahrzeug, wobei die Kippbrücke (2; 102) am Kipperfahrzeug in eine Entladekippstellung schwenkbar ist, um aufgeladenes Schüttgut an einer Entladeseite (10) der Kippbrücke (2; 102) auszuschütten, wobei zumindest bereichsweise die Dicke des Kippbrückenbodenblechs (6; 106) in Zonen größerer Abnutzungswahrscheinlichkeit größer ist als in Zonen kleinerer Abnutzungswahrscheinlichkeit, **dadurch gekennzeichnet, dass** die Blechdickenabnahme von Zonen größerer Abnutzungswahrscheinlichkeit nach Zonen kleinerer Abnutzungswahrscheinlichkeit stufenfrei kontinuierlich verläuft und dass das Kippbrückenbodenblech (6; 106) ein mit kontinuierlich abnehmender Dicke ausgebildetes Blechelement ist oder wenigstens ein solches umfasst, wobei zumindest bereichsweise die Blechdicke des Kippbrückenbodens (6; 106) mit zunehmendem Abstand vom entladeseitigen Ende (22; 122) des Kippbrückenbodens (6; 106) in Richtung zu dem dem entladeseitigen Ende gegenüberliegenden Ende (24; 124) des Kippbrückenbodens abnimmt.

2. Kippbrücke nach Anspruch 1, **dadurch gekennzeichnet, dass** das Blechelement durch einen kontinuierlichen Formgebungsprozess und insbesondere durch Walzformgebung ausgebildet ist.

3. Kippbrücke nach einem der vorhergehenden Ansprüche, **dadurch gekennzeichnet, dass** das Kippbrückenbodenblech (6; 106) aus Metall besteht.

4. Kippbrücke nach einem der vorhergehenden Ansprüche, **dadurch gekennzeichnet, dass** das Kippbrückenbodenblech zumindest größtenteils aus Stahl (6; 106) besteht.

5. Kippbrücke nach einem der vorhergehenden Ansprüche, **dadurch gekennzeichnet, dass** das entladeseitige Ende (22; 122) des Kippbrückenbodens das in der Anordnung der Kippbrücke (2; 102) am Kipperfahrzeug heckseitige Ende des Kippbrückenbodens (6; 106) ist.

6. Kippbrücke nach einem der vorhergehenden Ansprüche, **dadurch gekennzeichnet, dass** die Blechdicke des Kippbrückenbodens (6; 106) am entladeseitigen Ende (22) mindestens dem 1,5-fachen der Blechdicke an dem dem entladeseitigen Ende gegenüberliegenden Ende (24) des Kippbrückenbodens entspricht.

7. Kippbrücke nach einem der vorhergehenden Ansprüche, **dadurch gekennzeichnet, dass** die Blechdickenabnahme stetig linear verläuft.

## Claims

1. Tipping body with a tipping body sheet metal bottom (6; 106) for transporting bulk materials or the like on a dump vehicle, wherein the tipping body (2; 102) is pivotable on the dump vehicle into an unloading tipping position to discharge the bulk material on an unloading side (10) of the tipping body (2; 102), whereby at least in some areas the thickness of the sheet metal tipping body bottom (6; 106) is greater in areas more prone to wear than in areas less prone to wear, **characterised in that** the decrease in thickness of the sheet metal progresses continuously from areas of greater wear probability to areas of lesser wear probability and **in that** the sheet metal tipping body bottom (6; 106) is a sheet metal element designed to have a continuously reducing thickness or at least comprises such an element, whereby at least in some areas the metal thickness of the tipping body bottom (6; 106) reduces with increasing distance from the unloading side end (22; 122) of the tipping body base (6; 106) in the direction of the end (24; 124) of the tipping body bottom opposite the unloading side end.

2. Tipping body according to claim 1, **characterised in that** the sheet metal element is formed by a continual shaping process and in particular by roller shaping.

3. Tipping body according to one of the preceding claims, **characterised in that** the tipping body sheet metal bottom (6; 106) is made of metal.

4. Tipping body according to one of the preceding claims, **characterised in that** the tipping body sheet metal bottom is made at least mostly of steel (6; 106).

5. Tipping body according to one of the preceding claims, **characterised in that** the unloading side end (22; 122) of the tipping body bottom is the rear end of the tipping body bottom (6; 106) in the arrangement of the tipping body (2; 102) on the dump vehicle.

6. Tipping body according to one of the preceding claims, **characterised in that** the sheet metal thickness of the tipping body bottom (6; 106) at the unloading side end (22) corresponds to at least 1.5 times the sheet metal thickness at the end (24) opposite the unloading side end of the tipping body bottom.

7. Tipping body according to one of the preceding claims, **characterised in that** the reduction in the thickness of the sheet metal is continuously linear.

## Revendications

1. Benne basculante avec un fond de benne basculante (6 ; 106) en tôle servant à transporter des produits en vrac ou similaires sur un camion à benne basculante, sachant que la benne basculante (2 ; 102) sur le camion à benne basculante peut pivoter dans une position inclinée de déchargement pour déverser les produits en vrac chargés au niveau d'un côté de déchargement (10) de la benne basculante (2 ; 102), sachant que l'épaisseur de la tôle du fond de la benne basculante (6 ; 106) est au moins par endroits plus importante dans les zones à probabilité d'usure plus grande que dans les zones à probabilité d'usure plus faible, **caractérisé en ce que** la diminution de l'épaisseur de la tôle est continue sans palier des zones à probabilité d'usure plus grande vers les zones à probabilité d'usure plus faible et **en ce que** la tôle du fond de la benne basculante (6 ; 106) est un élément en tôle réalisé avec une épaisseur diminuant en continu ou comprend au moins un tel élément, sachant que l'épaisseur de la tôle du fond de la benne basculante (6 ; 106) diminue au moins par endroits plus la distance à l'extrémité côté déchargement (22 ; 122) du fond de la benne basculante (6 ; 106) augmente en direction de l'extrémité (24 ; 124) du fond de la benne basculante opposée à l'extrémité côté déchargement.

2. Benne basculante selon la revendication 1, **caractérisée en ce que** l'élément en tôle est réalisé par un processus de façonnage continu et en particulier par laminage.

3. Benne basculante selon l'une quelconque des revendications précédentes, **caractérisée en ce que** la tôle du fond de la benne basculante (6 ; 106) est en métal.

4. Benne basculante selon l'une quelconque des revendications précédentes, **caractérisée en ce que** la tôle du fond de la benne basculante est au moins en grande partie en acier (6 ; 106).

5. Benne basculante selon l'une quelconque des revendications précédentes, **caractérisée en ce que** l'extrémité côté déchargement (22 ; 122) du fond de la benne basculante est l'extrémité du fond de la benne basculante (6 ; 106) située à l'arrière dans l'agencement de la benne basculante (2 ;102) sur le camion à benne basculante.

6. Benne basculante selon l'une quelconque des revendications précédentes, **caractérisée en ce que** l'épaisseur de la tôle du fond de la benne basculante (6 ; 106) à l'extrémité côté déchargement (22) correspond au moins à 1,5 fois l'épaisseur de la tôle à l'extrémité (24) du fond de la benne basculante opposée à l'extrémité côté déchargement.

7. Benne basculante selon l'une quelconque des revendications précédentes, **caractérisée en ce que** la diminution de l'épaisseur de la tôle est continuellement linéaire.
